# EUROPÄISCHE PATENTANMELDUNG

(11) **EP 1 491 792 A1**
(43) Veröffentlichungstag der Anmeldung: **29.12.2004**
(21) Anmeldenummer: 04014430.5
(22) Anmeldetag: 19.06.2004
(51) Int. Cl.: F16F 15/131, F16F 15/139, F16D 23/14

(54) **Drehmomentübertragungssystem für einen Fahrzeugantriebsstrang**

(30) Priorität: 28.06.2003 DE 10329194
(71) Anmelder: ZF Sachs AG, 97424 Schweinfurt (DE)
(72) Erfinder: Feldhaus, Reinhard, 97464 Niederwerrn (DE); Orlamünder, Andreas, 97422 Schweinfurt (DE); Heiartz, Markus, 69214 Heidelberg-Eppelheim (DE); Vogt, Sebastian, 97616 Bad Neustadt (DE); Weth, Jürgen, 97464 Niederwerrn (DE); Peterseim, Michael, 97493 Bergheinfeld (DE); Dögel, Thomas, 97688 Bad Kissingen (DE); Matschas, Steffen, 97421 Schweinfurt (DE)

(57) **Zusammenfassung**

Ein Drehmomentübertragungssystem für einen Fahrzeugantriebsstrang umfasst eine Torsionsschwingungsdämpferanordnung (12) mit einer mit einem Antriebsorgan zu koppelnden Primärseite (16) und einer gegen die Wirkung einer Dämpferelementenanordnung (30) bezüglich der Primärseite (16) um eine Drehachse (A) drehbaren Sekundärseite (24), eine Kupplungsanordnung (14), wobei ein Eingangsbereich (70) der Kupplungsanordnung (14) mit der Sekundärseite (24) der Torsionsschwingungsdämpferanordnung (12) zur gemeinsamen Drehung um die Drehachse (A) und in Richtung der Drehachse (A) verlagerbar gekoppelt ist, eine Reibeinrichtung (84) mit einem ersten Reibbereich (86) an der Primärseite (16) der Torsionsschwingungsdämpferanordnung (12) und einem zweiten Reibbereich (88) an der Kupplungsanordnung (14), wobei durch Verschiebung der Kupplungsanordnung (14) bezüglich der Sekundärseite (24) der Torsionsschwingungsdämpferanordnung (12) in Richtung der Drehachse (A) der erste Reibbereich (86) und der zweite Reibbereich (88) in Reibwechselwirkung miteinander bringbar sind.

## Beschreibung

Die vorliegende Erfindung betrifft ein Drehmomentübertragungssystem für einen Fahrzeugantriebsstang, umfassend eine Torsionsschwingungsdämpferanordnung sowie eine Reibungskupplung.

Es ist bekannt, zur Dämpfung von Drehschwingungen im Antriebsstrang von Kraftfahrzeugen als Torsionsschwingungsdämpfer sogenannte Zweimassenschwungräder einzusetzen, welche beispielsweise zwischen einer Antriebswelle, also einer Kurbelwelle einer Brennkraftmaschine, und dem Eingangsbereich einer Reibungskupplung positioniert sind. Derartige Zweimassenschwungräder stellen zwei bezüglich einander um eine Drehachse drehbare Massenbereiche dar, wobei die Bewegung der Massebereiche relativ zueinander gegen die Rückstellwirkung einer Federanordnung erfolgt. Bei derartigen Systemen besteht grundsätzlich das Problem, dass sie eine bestimmte Resonanzfrequenz aufweisen, die durch konstruktive Maßnahmen im Allgemeinen so gelegt wird, dass die unterhalb der Leerlauffrequenz bzw. unter der Zündfrequenz eines Brennkraftmotors liegt. Weiterhin wird durch das Bereitstellen von Reibeinrichtungen, beispielsweise auch verschleppt wirkenden Reibeinrichtungen oder winkelgesteuerten Reibeinrichtungen, dafür gesorgt, dass bei Durchlaufen der Resonanzfrequenz übermäßige Relativdrehungen zwischen der Primärseite und der Sekundärseite eines derartigen Zweimassenschwungrads nicht auftreten werden. Das Bereitstellen derartiger Reibeinrichtungen führt jedoch zu dem Problem, dass sie auch dann, wenn sie nicht mehr benötigt werden, also im normalen Fahrbetrieb, wirksam sind und somit die Entkopplung zwischen Primärseite und Sekundärseite beeinträchtigen können.

Aus der DE 195 19 363 A1 ist ein Drehmomentübertragungssystem mit einerTorsionsschwingungsdämpferanordnungundeinerdamitverbundenen Kupplungsanordnung bekannt, bei welcher zusätzlich eine wahlweise aktivierbare Reibeinrichtung vorgesehen ist. Diese Reibeinrichtung wirkt zwischen der Kupplungsanordnung und der Primärseite der Torsionsschwingungsdämpferanordnung und somit auch zwangsweise zwischen der Sekunsärseite der Torsionsschwingungsdämpferanordnung und der Primärseite derselben. Durch einen der Kupplungsanordnung zugeordneten Betätigungsmechanismus kann durch weitergehendes Beaufschlagen in Richtung Ausrücken dafür gesorgt werden, dass an der Kupplungsanordnung vorgesehene Komponenten, beispielsweise stempelartig ausgestaltete Komponenten, oder an einer Schwungmasse vorgesehene Reibelemente in Reibwechselwirkung mit an der Primärseite der Torsionsschwingungsdämpferanordnung vorgesehenen Elementen treten und somit die Reibeinrichtung aktivieren.

Aus der DE 100 56 733 A1 ist ein Drehmomentübertragungssystem bekannt, bei welchem ebenfalls eine Torsionsschwingungsdämpferanordnung primärseitig an eine Antriebswelle anzubinden ist und die Sekundärseite mit einem Eingangsbereich einer Kupplungsanordnung verbunden ist. Insbesondere ist die Sekundärseite der Torsionsschwingungsdämpferanordnung mit der Kupplungsanordnung bzw. dem Eingangsbereich derselben fest verbunden, ist jedoch elastisch verformbar ausgeführt. Durch axiale Beaufschlagung der Kupplungsanordnung kann auf Grund dieser Elastizität die Sekundärseite der Torsionsschwingungsdämpferanordnung verformt werden und bei dieser Verformung in Reibwechselwirkung mit der Primärseite der Torsionsschwingungsdämpferanordnung treten, um in definierten Betriebszuständen durch Einführen dieser Reibwechselwirkung eine zusätzliche Energieabfuhr bereitzustellen und das Auftreten einer Resonanzüberhöhung zu vermeiden. Die dazu aber erforderliche Verformung der Sekundärseite der Torsionsschwingungsdämpferanordnung kann jedoch zu einer undefinierten Beeinträchtigung der Wirkcharakteristik der Torsionsschwingungsdämpferanordnung führen.

Es ist die Aufgabe der vorliegenden Erfindung, ein Drehmomentübertragungssystem mit einer Torsionsschwingungsdämpferanordnung und einer Kupplungsanordnung bereitzustellen, bei welchem in zuverlässiger und definierter Art und Weise in vorbestimmbaren Betriebszuständen eine Reibwirkung erzeugbar ist.

Erfindungsgemäß wird diese Aufgabe gelöst durch ein Drehmomentübertragungssystem für einen Fahrzeugantriebsstrang, umfassend eine Torsionsschwingungsdämpferanordnung mit einer mit einem Antriebsorgan zu koppelnden Primärseite und einer gegen die Wirkung einer Dämpferelementenanordnung bezüglich der Primärseite um eine Drehachse drehbaren Sekundärseite, eine Kupplungsanordnung, wobei ein Eingangsbereich der Kupplungsanordnung mit der Sekundärseite der Torsionsschwingungsdämpferanordnung zur gemeinsamen Drehung um die Drehachse und in Richtung der Drehachse verlagerbar gekoppelt ist, eine Reibeinrichtung mit einem ersten Reibbereich an der Primärseite der Torsionsschwingungsdämpferanordnung und einem zweiten Reibbereich an der Kupplungsanordnung, wobei durch Verschiebung der Kupplungsanordnung bezüglich der Sekundärseite der Torsionsschwingungsdämpferanordnung in Richtung der Drehachse der erste Reibbereich und der zweite Reibbereich in Reibwechselwirkung miteinander bringbar sind.

Das erfindungsgemäße Drehmomentübertragungssystem nutztdie Axialverlagerung einer Kupplungsanordnung aus, um eine Reibeinrichtung wirksam bzw. unwirksam zu machen, vermeidet jedoch die beim Stand der Technik erforderliche Verformung eines Systembereichs des Drehmomentübertragungssystems, insbesondere der Torsionsschwingungsdämpferanordnung. Vielmehr ist durch die axial bewegbare Kopplung zwischen der Sekundärseite der Torsionsschwingungsdämpferanordnung und dem Eingangsbereich der Kupplungsanordnung dafür gesorgt, dass unabhängig davon, ob die Reibwechselwirkung in der Reibeinrichtung hergestellt ist oder nicht, jeder der Systembereiche Kupplungsanordnung und Torsionsschwingungsdämpferanordnung seine volle und definierte Funktionalität beibehält und nicht durch irgendwelche miteingeführte Verformungen beeinträchtigt ist.

Um für eine definierte Relativlage zwischen der Torsionsschwingungsdämpferanordnung und der Kupplungsanordnung sorgen zu können, wird vorgeschlagen, dass der Eingangsbereich der Kupplungsanordnung durch eine erste Vorspannanordnung bezüglich der Sekundärseite der Torsionsschwingungsdämpferanordnung in axialer Richtung zum voneinander Wegbewegen der Reibbereiche der Reibeinrichtung vorgespannt ist. Dabei kann die erste Vorspannanordnung wenigstens ein zwischen dem Eingangsbereich der Reibungskupplung und der Sekundärseite wirkendes Federelement, vorzugsweise Tellerfeder, umfassen.

Zum definierten Verlagern an der Kupplungsanordnung bezüglich der Sekundärseite der Torsionsschwingungsdämpferanordnung kann ein Betätigungsmechanismus vorgesehen sein zum axialen Verschieben der Kupplungsanordnung bezüglich der Sekundärseite der Torsionsschwingungsdämpferanordnung.

Dabei kann zum Bereitstellen eines mit möglichst wenigen Bauteilen realisierbaren Aufbaus vorgesehen sein, dass der Betätigungsmechanismus sowohl zum Betätigen der Kupplungsanordnung zum Ausrücken/Einrücken derselben aktivierbar ist, als auch zum Verschieben der Kupplungsanordnung bezüglich der Sekundärseite der Torsionsschwingungsdämpferanordnung aktivierbar ist. Beispielsweise ist es möglich, dass der Betätigungsmechanismus ein bezüglich des Eingangsbereichs der Kupplungsanordnung sich abstützendes erstes Organ und ein zum Einleiten einer Betätigungskraft bei Verstellung in einer ersten Stellrichtung sich bezüglich einer Kraftbeaufschlagungsanordnung der Kupplungsanordnung und bezüglich des ersten Organs abstützendes zweites Organ aufweist, wobei bei Verstellung in einer zweiten Stellrichtung das zweite Organ sich bezüglich des ersten Organs und einer feststehenden Baugruppe zum Verschieben der Kupplungsanordnung in axialer Richtung abstützt. Hier wird also ein weiteres elementares Prinzip der vorliegenden Erfindung erkennbar. Es wird nämlich der Betätigungsmechanismus so genutzt, dass er grundsätzlich in zwei Stellrichtungen verstellbar ist. In einer ersten Stellrichtung wird die Kupplung an sich betätigt oder zumindest ein Bereich derselben, bei Betätigung in einer zweiten Stellrichtung wird die Kupplungsanordnung verschoben.

Dabei kann weiter vorgesehen sein, dass das zweite Organ bezüglich der feststehenden Baugruppe über eine die Kupplungsanordnung in Richtung zum Herstellen der Reibwechselwirkung zwischen den Reibbereichen vorspannende zweite Vorspannanordnung abgestützt oder abstützbar ist. Auch hier ist es wieder möglich, dass die zweite Vorspannanordnung wenigstens ein Federelement, vorzugsweise Tellerfeder, umfasst. Um die Reibwechselwirkung zwischen den beiden Reibbereichen ohne irgendwelche lokale Zwängungen unbeeinträchtigt von irgendwelchen Relativneigungen zwischen der Primärseite der Torsionsschwingungsdämpferanordnung und dem Eingangsbereich der Kupplungsanordnung bereitstellen zu können, wird weiter vorgeschlagen, dass wenigstens einer der Reibbereiche bezüglich der diesen aufweisenden Baugruppe von Primärseite und Kupplungsanordnung durch eine dritte Vorspannanordnung in axialer Richtung elastisch und zum Vorspannen in Richtung auf den jeweils anderen Reibbereich zu abgestützt ist. Auch hier ist es wieder möglich, dass die dritte Vorspannanordnung wenigstens ein Federelement, vorzugsweise Schraubendruckfeder, umfasst.

Bei einer besonders bevorzugten Ausgestaltungsform der vorliegenden Erfindung kann weiter vorgesehen sein, dass die Kupplungsanordnung eine Abstützplatte sowie eine damit fest verbundene Gehäuseanordnung aufweist, wobei die Abstützplatte für wenigstens einen Kupplungsbereich der Kupplungsanordnung ein Widerlager bildet und die Kupplungsanordnung im Bereich der Abstützplatte mit der Sekundärseite der Torsionsschwingungsdämpferanordnung verbunden ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eineTeil-LängsschnittansichteinesDrehmomentübertragungssystems gemäß der vorliegenden Erfindung;
- Fig. 2: das in Fig. 1 dargestellte System bei aktivierter Reibeinrichtung;
- Fig. 3: eine Detailansicht einer Abwandlung des in Fig. 1 dargestellten Drehmomentübertragungssystems;
- Fig. 4: eine weitere der Fig. 1 entsprechende Ansicht einer alternativen Ausgestaltungsform eines erfindungsgemäßen Drehmomentübertragungssystems;
- Fig. 5: das in Fig. 4 dargestellte Drehmomentübertragungssystem bei aktivierter Reibeinrichtung;
- Fig. 6: eine weitere der Fig. 1 entsprechende Ansicht eines erfindungsgemäßen Drehmomentübertragungssystems;
- Fig. 7: das in Fig. 6 dargestellte Drehmomentübertragungssystem bei aktivierter Reibeinrichtung;
- Fig. 8: eine vergrößerte Detailansicht des Betätigungsmechanismus des Drehmomentübertragungssystems der Figuren 6 und 7.

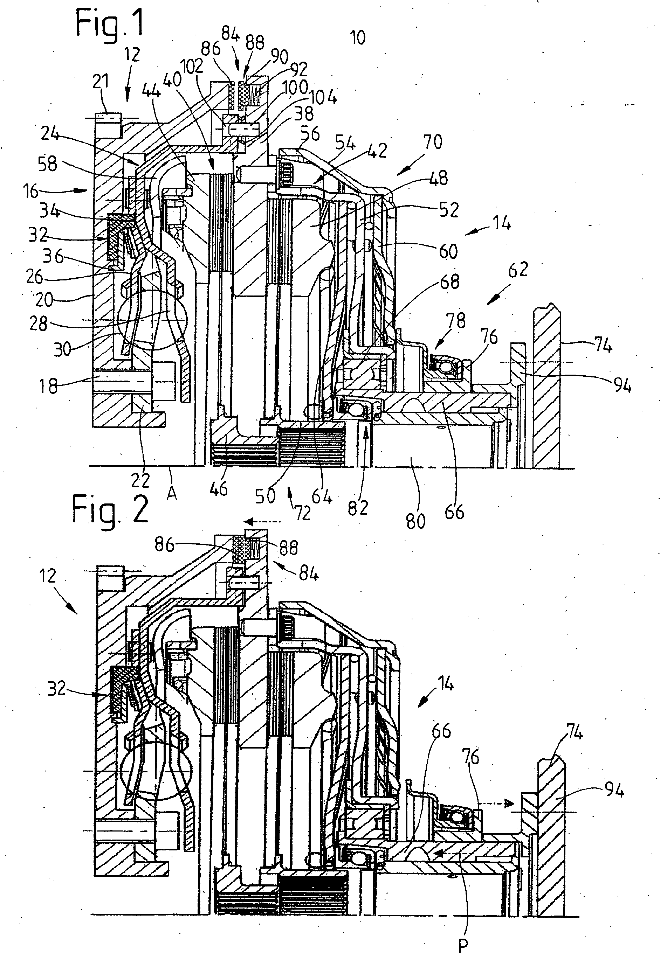

In Fig. 1 ist ein erfindungsgemäßes Drehmomentübertragungssystem allgemein mit 10 bezeichnet. Dieses Drehmomentübertragungssystem umfasst als zwei wesentliche Systembereiche zum einen eine Torsionsschwingungsdämpferanordnung 12, im Allgemeinen auch als Zweimassenschwungrad bezeichnet, zum anderen eine Kupplungsanordnung 14, hier aufgebaut nach Art einer Doppelkupplung.

Die Torsionsschwingungsdämpferanordnung 12 wiederum weist eine allgemein mit 16 bezeichnete Primärtseite auf, die durch eine Mehrzahl von Schraubbolzen 18 an eine Antriebswelle, also beispielsweise eine Kurbelwelle eines Brennkraftmotors, angebunden werden kann. Die Primärseite 16 weist im Wesentlichen ein scheibenartiges Masseteil 20 auf, das radial außen einen Anlasserzahnkranz 21 trägt, und weist weiterhin ein mit dem Scheibenteil 20 durch die Schraubbolzen 18 fest verbundenes Zentralscheibenelement 22 auf.

Eine Sekundräseite 24 der Torsionsschwingungsdämpferanordnung 12 umfasst zwei allgemein beidseits des Zentralscheibenelements 22 liegende Deckscheibenelemente 26, 28, welche radial außen durch Vernietung oder dergleichen miteinander fest verbunden sind. Diese beiden Deckscheibenelemente 26, 28 und auch das Zentralscheibenelement 22 bilden jeweilige Federfenster mit Abstützbereichen aus, in welchen beispielsweise als Schraubendruckfedern ausgebildete Dämpferelemente 30 positioniert sind. Gegen die Elastizitätswirkung dieser Dämpferelemente 30 kann die Sekundärseite 24 grundsätzlich bezüglich der Primärseite 16 um eine Drehachse A gedreht werden, und zwar beispielsweise so weit, bis im radial äußeren Bereich das Zentralscheibenelement 22 in Anlage an Umfangsanschlägen der Deckscheibenelemente 26, 28 tritt. Um eine definierte Grundreibung bereitstellen zu können, ist bei der in Fig. 1 dargestellten Anordnung eine Grundreibeinrichtung 32-vorgesehen, welche ein mit der Sekundärseite 24 in Umfangsrichtung drehbares Reiborgan 34 umfasst, das an dem Scheibenteil 20 und einem damit drehfest gekoppelten weiteren Reiborgan 36 in Reibanlage ist und somit bei Relativdrehung zwischen der Primärseite 16 und der Sekundärseite 24 für eine definierte, beispielsweise auch erst verschleppt einsetzende Reibwirkung sorgt.

Es sei darauf hingewiesen, dass die dargestellte Torsionsschwingungsdämpferanordnung 12 nur beispielhaft ist für eine Vielzahl verschieden ausgestalteter Zweimassenschwungräder. Hier können also selbstverständlich im Umfang der vorliegenden Erfindung Variationen vorgenommen werden, ohne von dem Prinzip in der vorliegenden Erfindung abzuweichen. So ist es beispielsweise möglich, die Sekundärseite 24 durch axial oder/und radial wirkende Lageranordnungen definiert an der Primärseite 16 zu lagern. Auch kann die Grundreibeinrichtung 32 an anderer Stelle wirken, beispielsweise zwischen zumindest einem der Deckscheibenelemente 26, 28 und dem Zentralscheibenelement 22.

Die Kupplungsanordnung 14, welche, wie bereits ausgeführt, nach Art einer Doppelkupplung ausgeführt ist, umfasst eine Zwischenplatte 38, welche für die beiden Kupplungsbereiche 40, 42 der Kupplungsanordnung 14 ein Widerlager bildet. Durch eine Anpressplatte 44 des ersten Kupplungsbereichs 40 ist eine Kupplungsscheibe 46 dieses Kupplungsbereichs gegen diese das Widerlager bildende Zwischenplatte 38 pressbar, während durch eine Anpressplatte 48 eine Kupplungsscheibe 50 des zweiten Kupplungsbereichs 42 gegen die andere axiale Seite der Zwischenplatte 38 pressbar ist. Je nachdem, in welchem der Kupplungsbereiche 40 oder 42 jeweils der Reibzustand hergestellt ist, wird über eine der Kupplungsscheiben 46, 50 dann ein Drehmoment zu einer von zwei zueinander koaxial angeordneten Getriebeeingangswellen übertragen.

Die Reibungskupplung 14 bzw. ein Eingangsbereich 70 derselben ist mit der Sekundärseite 24 der Torsionsschwingungsdämpferanordnung 12 drehfest, in Richtung der Drehachse A jedoch verlagerbar gekoppelt. Zu diesem Zwecke sind an mehreren Umfangspositionen beispielsweise an der Zwischenplatte 38 Drehkopplungsstifte 100 vorgesehen, die in zugeordnete Aussparungen 102 des Deckscheibenelements 28 bzw. eines daran vorgesehen ringartigen Bereichs eingreifen.

Mit der Zwischenplatte 38 ist ein Kupplungsgehäuse 52 fest verbunden. Die Anpresskrafteinleitung in die Anpressplatte 44 des ersten Kupplungsbereichs 40 erfolgt über eine Betätigungskraftübertragungsanordnung 54, die zwei miteinander fest verbundene Bauteile 56, 58 umfasst. Dabei beaufschlagt das Bauteil 58 die Anpressplatte 44 beispielsweise über eine Verschleißnachstellvorrichtung, während das Bauteil 56 durch eine Kraftbeaufschlagungsanordnung 60 beaufschlagt wird, die sich wiederum zur Krafteinleitung am Kupplungsgehäuse 52 abstützt. Diese Kraftbeaufschlagungsanordnung kann bei dem dargestellten Typ einer sogenannten Normal-Offen-Kupplung eine Mehrzahl von Betätigungskraftübertragungshebeln, die beispielsweise auch integral miteinander verbunden sein können, umfassen, so dass durch diese Kraftbeaufschlagungsanordnung im Wesentlichen kein eigener Kraftbeitrag geliefert wird, sondern nur die von einem nachfolgend noch beschriebenen Betätigungsmechanismus 62 bereitgestellte Betätigungskraft in den Kupplungsbereich 40 eingeleitet wird. Auch für den Kupplungsbereich 42 ist eine derartige Kraftbeaufschlagungsanordnung 64 vorgesehen, die an der Innenseite des Kupplungsgehäuses 52 abgestützt ist und die Anpressplatte 48 des zweiten Kupplungsbereichs 42 beaufschlagen kann, um diese in Richtung auf die Zwischenplatte 38 zu zu pressen.

Der bereits angesprochene Betätigungsmechanismus 62 umfasst ein erstes ringartig oder hülsenartig ausgebildetes Betätigungsorgan 66, das über ein Drehentkopplungslager 68 axial bezüglich des Kupplungsgehäuses 52 und somit des allgemein mit 70 bezeichneten Eingangsbereichs der Kupplungsanordnung 14 in beiden axialen Richtungen abgestützt ist. Es sei hier darauf hingewiesen, dass dieser Eingangsbereich 70 im Wesentlichen alle mit der Zwischenplatte 38 drehfest gekoppelten Baugruppen bzw. Bauteile umfasst, also auch das Kupplungsgehäuse 52, die Anpressplatten 44, 48, während der Ausgangsbereich 72 der Kupplungsanordnung 14 im Wesentlichen durch die beiden Kupplungsscheiben 46, 50 bereitgestellt ist.

Das erste Betätigungsorgan 66, das somit mit dem Kupplungsgehäuse 52 axial fest, bezüglich diesem aber frei drehbar gehalten ist, ist weiterhin in nicht dargestellter Art und Weise bezüglich einer feststehenden Baugruppe 74, also beispielsweise einem Getriebegehäuse, einer Kupplungs/Getriebe-Glocke oder dergleichen, drehfest gehalten, bezüglich dieser Baugruppe 74 aber grundsätzlich frei in axialer Richtung bewegbar. Hier kann beispielsweise an der Baugruppe 40 ein axial vorstehender Drehkopplungsstift vorgesehen sein, der in eine entsprechende Ausnehmung des ersten Betätigungsorgans 66 eingreift. An der Außenseite des ersten Betätigungsorgans 66 ist ein ringartig ausgestaltetes zweites Betätigungsorgan 76 vorgesehen. Die beiden Betätigungsorgane 66, 76 stehen miteinander in Gewindeeingriff, so dass durch Drehen des zweiten Betätigungsorgans 76 bezüglich des ersten Betätigungsorgans 66 eine Axialverlagerung des zweiten Betätigungsorgans 76 induziert wird. Hier kann beispielsweise an dem zweiten Betätigungsorgan 76 an einer Umfangspositionierung ein nach radial außen greifender Hebelabschnitt vorgesehen sein, an dem ein Bowdenzug oder ein sonstiges Krafteinleitelement angreift. Das zweite Betätigungsorgan 76 wirkt über ein weiteres Drehentkopplungslager 78 auf den radial inneren Endbereich der Kraftbeaufschlagungsanordnung 60 ein, so dass bei Verdrehen des zweiten Betätigungsorgans in einer ersten Drehrichtung bzw. einer ersten Stellrichtung dieses axial in Richtung auf das Kupplungsgehäuse 52 zu verschoben wird und dabei durch Verschieben des radial inneren Bereichs der Kraftbeaufschlagungsanordnung 60 auf das Kupplungsgehäuse 52 zu den radial äußeren Bereich der Kraftbeaufschlagungsanordnung 60 in Richtung vom Kupplungsgehäuse 52 weg bewegt. Durch diese Bewegung wird über die Betätigungskraftübertragungsanordnung 54 die Anpressplatte 44 in Richtung auf die Zwischenplatte 38 zu gezogen.

Auch für den zweiten Kupplungsbereich 42 ist ein derartiges zweites Betätigungsorgan 80 vorgesehen, das mit dem ersten Betätigungsorgan 66 in Gewindeeingriff steht und über ein Drehentkopplungslager 82 die Kraftbeaufschlagungsanordnung 64 beaufschlagen kann, um den Einrückzustand des zweiten Kupplungsbereichs 42 zu erlangen, der somit auch nach Art einer Normal-Offen-Kupplung ausgestaltet ist.

Bei dem in Fig. 1 dargestellten Drehmomentübertragungssystem ist weiterhin eine wahlweise aktivierbare Reibeinrichtung 84 vorgesehen. Diese umfasst einen ersten Reibbereich 86 an der Primärseite 16 der Torsionsschwingungsdämpferanordnung 12 und umfasst weiterhin einen zweiten Reibbereich 88 am Eingangsbereich 70 der Kupplungsanordnung 14, insbesondere an der Zwischenplatte 38. Der erste Reibbereich 86 kann beispielsweise eine axial ausgerichtete Stirnfläche des scheibenartigen Bauteils 20 der Primärseite 16 umfassen oder einen daran vorgesehenen ringartigen Reibbelag oder dergleichen. Der zweite Reibbereich 88 an der Kupplungsanordnung 14 kann ebenfalls ein ringartiges Reibelement 90 umfassen, das durch Vorspannfedern 92 axial bezüglich der Zwischenplatte 38 abgestützt ist und durch diese Vorspannfedern 92 in Richtung auf den ersten Reibbereich 86 zu vorgespannt ist. Es sei darauf hingewiesen, dass selbstverständlich auch bei diesem zweiten Reibbereich 88 mehrere beispielsweise stempelartig ausgebildete, in Umfangsrichtung getrennt zueinander liegende Reiborgane vorgesehen sein können.

In dem in Fig. 1 dargestellten Zustand des Drehmomentübertragungssystems 10 ist die Reibeinrichtung 84 nicht aktiviert, d.h. die beiden Reibbereiche 86, 88 sind axial voneinander wegbewegt und stehen somit nicht in Reibwechselwirkung. Durch normale Betätigung der beiden Kupplungsbereiche 40, 42, d.h. durch entsprechende Verdrehung der zweiten Betätigungsorgane 76, 80 bezüglich des ersten Betätigungsorgans 66, kann das über die Torsionsschwingungsdämpferanordnung 12 in den Eingangsbereich 70 der Kupplungsanordnung 14 eingeleitete Drehmoment wahlweise zu einer der beiden Getriebeeingangswellen geleitet werden.

Soll nun die Reibeinrichtung 84 aktiviert werden, um beispielsweise in der Stratphase eines Brennkraftmotors dafür zu sorgen, dass bei Durchlaufen des Resonanzbereichs Schwingungsüberhöhungen nicht auftreten, also um zusätzlich durch die erzeugte Reibung Energie abzuführen oder im Extremfall die Torsionsschwingungsdämpferanordnung 12 vollständig zu überbrücken, wird die gesamte Kupplungsanordnung 14, insbesondere der Eingangsbereich 70 derselben, axial verschoben, so dass der zweite Reibbereich 88 sich dem ersten Reibbereich 86 annähert und diese beiden Reibbereiche in Reibwechselwirkung miteinander treten können. Zu diesem Zwecke wird das zweite Betätigungsorgan 76 in einer zweiten Drehrichtung gedreht, welche der Drehrichtung, die zum Erlangen des Einrückzustands des Kupplungsbereichs 40 erforderlich ist, entgegengesetzt ist. Dadurch wird dieses zweite Betätigungsorgan 76 auch in der entgegengesetzten axialen Richtung verschoben, also in der Darstellung der Fig. 1 nach rechts und auf die feststehende Baugruppe 74 zu. Ein mit dem zweiten Betätigungsorgan 76 fest verbundenes oder beispielsweise damit integral ausgestaltetes oder am zweiten Betätigungsorgan 76 vorgesehenes Anpresselement 94 nähert sich bei dieser Verstellung der feststehenden Baugruppe 74 an und gelangt schließlich nach entsprechendem Verstellweg, der erforderlich ist, um bestimmte Axialspiele zu überwinden, in Anlage daran. Bei weiter anhaltender Verstellung des zweiten Betätigungsorgans 76 in dieser Stellrichtung wird nunmehr unter Abstützung des Abstützelements 94 an der feststehenden Baugruppe 74 die gesamte Kupplungsanordnung 14 in axialer Richtung verschoben, da das Betätigungsorgan 76 sich nicht weiter axial verlagern kann und somit das erste Betätigungsorgan 66, wie durch einen Pfeil P in Fig. 2 angedeutet, axial verschoben wird. Es wird dann der Zustand erlangt, der in Fig. 2 dargestellt ist. Es sind also die beiden Reibbereiche 86, 88 in Reibwechselwirkung miteinander, so dass zusätzlich zu der durch die Grundreibeinrichtung 32 bereitgestellten Reibkraft noch die durch die Reibeinrichtung 84 bereitgestellte Reibkraft wirksam ist und ein zusätzlicher Beitrag zur Energieabfuhr geliefert wird.

Soll dieser Zustand wieder aufgehoben werden, so wird lediglich das zweite Betätigungsorgan 76 wieder in entgegengesetzter Richtung verstellt, also im Wesentlichen wieder in der ersten Stellrichtung, so dass dieses wieder in einem Zustand ist, in dem es dann durch weiter anhaltende Verstellung in der ersten Stellrichtung durch Beaufschlagung der Kraftbeaufschlagungsanordnung 60 den ersten Kupplungsbereich 40 in den Einrückzustand bringen kann.

Um dafür zu sorgen, dass in einem Zustand, in welchem die Reibeinrichtung 84 nicht aktiv sein soll, die Kupplungsanordnung 14 den in Fig. 1 dargestellten Zustand einnimmt, wirkt zwischen dieser Kupplungsanordnung 14, insbesondere dem Eingangsbereich 70 derselben, und der Sekundärseite 24 der Torsionsschwingungsdämpferanordnung 12 eine mehrere Federelemente 104 umfassende Vorspannanordnung. Diese Federelemente 104, welche nach Art von Tellerferden, Schraubendruckfedern oder dergleichen ausgebildet sein können, sind die Drehkopplungsstifte 100 umgebend angeordnet und spannen somit die Sekundärseite 24 axial bezüglich der Zwischenplatte 38 so vor, dass die beiden Reibbereiche 86, 88 voneinander wegbewegt werden.

Um dafür zu sorgen, dass bei aktivierter Reibeinrichtung 84 eine übermäßige axiale Belastung der Sekundärseite 24 der Torsionsschwingungsdämpferanordnung 24 nicht auftritt, ist es beispielsweise möglich, durch die axiale Abstützwirkung der Reibeinrichtung 84 oder/und durch eine Hubbegrenzung im Bereich des Betätigungsmechanismus 62 dafür zu sorgen, dass die auch über die Federelemente 104 in die Sekundärseite 24 eingeleiteten axialen Kräfte ein bestimmtes Maximum nicht übersteigen.

Es sei darauf hingewiesen, dass selbstverständlich bei der vorangehend beschriebenen Ausgestaltungsform Änderungen vorgenommen werden können, die auch für nachfolgend beschriebene Ausgestaltungsformen zutreffen. So kann der Betätigungsmechanismus 62 auch von anderem Aufbau sein und beispielsweise ein Nehmerzylindersystem umfassen, bei dem beispielsweise ein Zylindergehäuse das erste Betätigungsorgan bildet, während jeweilige Kolbenelemente zweite Betätigungsorgane bilden, die dann axial verschoben werden können. Bei zumindest einem dieser Kolbenelemente muss dann ein doppelt wirkender Mechanismus vorgesehen sein, um dieses in beide axialen Richtungen verschieben bzw. beaufschlagen zu können. Weiterhin ist es selbstverständlich möglich, dass das Abstützelement 94 auch an der feststehenden Baugruppe 74 vorgesehen bzw. damit integral ausgestaltet ist, so dass grundsätzlich zwischen dem zweiten Betätigungsorgan 76 und diesem Abstützelement 94 ein bestimmtes Axialspiel vorhanden ist, das zum Aktivieren der Reibeinrichtung 84 dann zunächst überwunden werden muss.

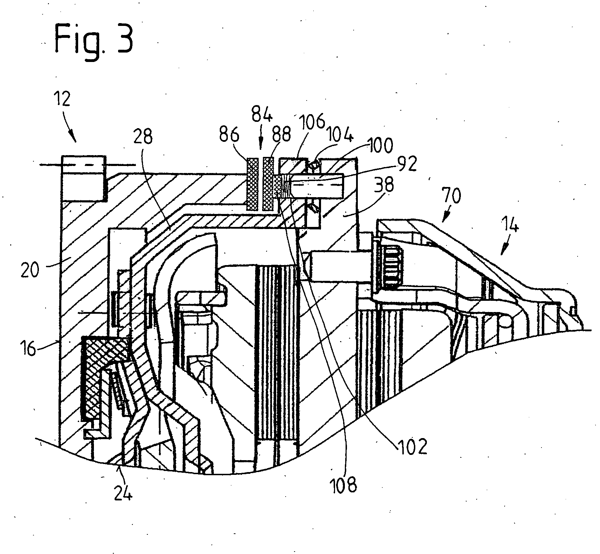

Eine Abwandlung des in Fig. 1 gezeigten Systems ist in Fig. 3 dargestellt. Man erkennt hier, dass das Deckscheibenelement 28 weiter nach radial außen ragt und mit seinem flanschartigen Abschnitt 106, in welchen auch die Drehkopplungsstifte 100 eingreifen, zwischen demjenigen Bereich der Primärseite 16, d.h. des scheibenartigen Bauteils 20, an dem der erste Reibbereich 86 vorgesehen ist, und der Zwischenplatte 38 liegt. Der zweite Reibbereich 88 stützt sich nunmehr über die Federn 92 an den axialen Enden der Drehkopplungsstifte 100 und somit der Zwischenplatte 38 ab. Die Drehankopplung des zweiten Reibbereichs 88 an den Eingangsbereich 70 der Kupplungsanordnung 14 erfolgt somit im Wesentlichen durch den Bereich 106 des Deckscheibenelements 28, also über die Sekundärseite der Torsionsschwingungsdämpferanordnung 12. Hier können beispielsweise, ebenso wie im Ausgestaltungsbeispiel der Figuren 1 und 2, am zweiten Reibbereich 88 Drehkopplungsabschnitte 108 vorgesehen sein, die in die Öffnungen 102 des Deckscheibenelements 28 eingreifen und somit den zweiten Reibbereich 88 zur Drehung mitnehmen.

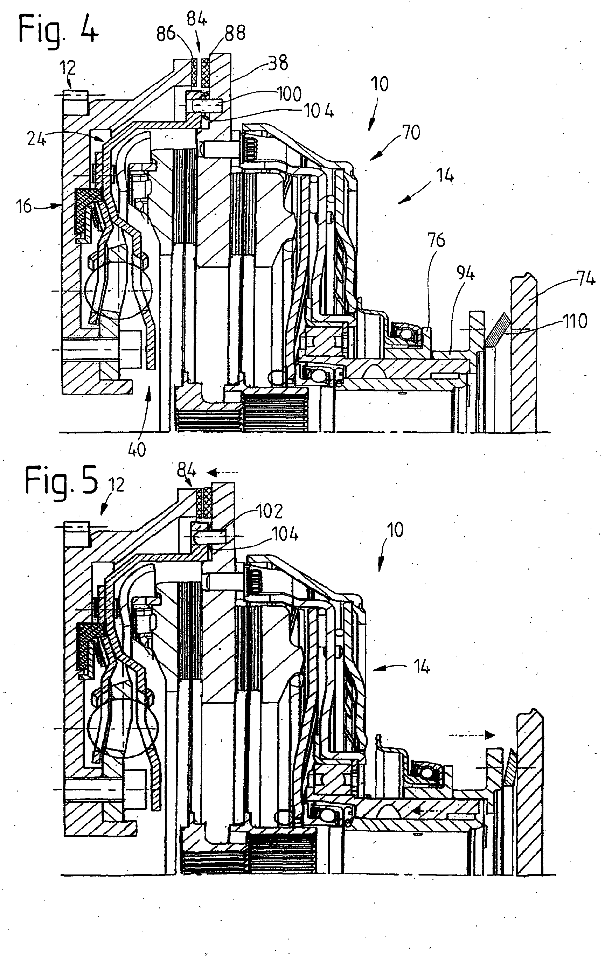

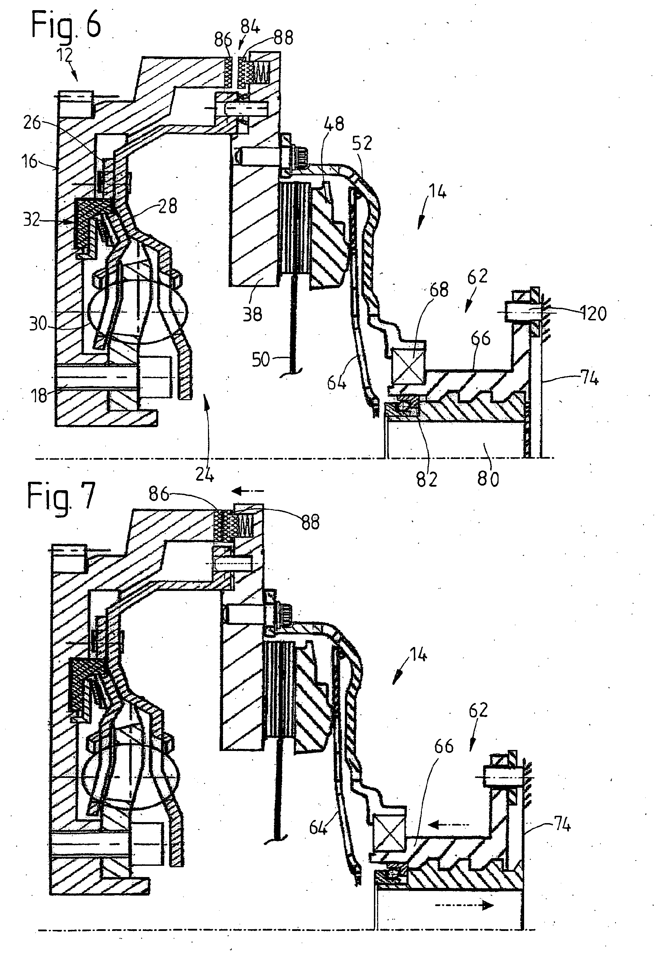

Eine weitere Ausgestaltungsform eines erfindungsgemäßen Drehmomentübertragungssystems ist in den Figuren 4 und 5 gezeigt. Dieses Drehmomentübertragungssystem 10 entspricht hinsichtlich des grundsätzlichen Aufbaus der Torsionsschwingungsdämpferanordnung 12 und der Kupplungsanordnung 14 den vorangehend beschriebenen Ausgestaltungsformen, so dass diesbezüglich auf die voranstehenden Ausführungen verwiesen wird.

Bei der in den Figuren 4 und 5 daregstellten Ausgestaltungsform ist das dem Kupplungsbereich 40 zugeordnete zweite Betätigungsorgan 76, ggf. über das Abstützelement 94, an der feststehenden Baugruppe 74 vermittels einer beispielsweise tellerfederartig ausgestalteten Vorspannfeder 110 abgestützt. Diese Vorspannfeder 110 spannt die Kupplungsanordnung 15 entgegen der Vorspannwirkung der Federelemente 104 in Richtung zur Sekundärseite 24 der Torsionsschwingungsdämpferanordnung 12 vor, wobei jedoch die durch die Federelemente 104 bereitgestellte Gesamtvorspannkraft größer ist, als die durch die Vorspannfeder 110 gelieferte Vorspannkraft. Durch die Vorspannfeder 110 wird jedoch im Bereich der Abstützung zwischen der feststehenden Baugruppe 74 einerseits und dem ersten Reibbereich 86 an der Primärseite 16 der Torsionsschwingungsdämpferanordnung 12 andererseits eine weitere Elastizität eingeführt, so dass nunmehr der zweite Reibbereich 88 der Reibeinrichtung 84 ohne weitere Elastizität am Eingangsbereich 70 der Kupplungsanordnung 14 angebracht sein kann.

Auch hier ist eine Ausgestaltungsform möglich, wie sie in Fig. 3 gezeigt ist. Das bzw. die Reiborgane des zweiten Reibbereichs 84 können dann fest axial abgestützt an den Drehkopplungsstiften 100 vorgesehen sein bzw. daran ggf. auch integral ausgestaltet sein oder fest getragen sein.

Es sei darauf hingewiesen, dass bei den vorangehend beschriebenen Ausgestaltungsformen, bei welchen der Betätigungsmechanismus 62 zwei zweite Betätigungsorgane 76 und 80 aufweist, selbstverständlich auch das dem Kupplungsbereich 42 zugeordnete Betätigungsorgan 80 genutzt werden könnte, um die Axialverschiebung der gesamten Kupplungsanordnung erlangen zu können. In diesem Falle könnte dann beispielsweise das mit 94 bezeichnete Abstützelement mit dem ersten Betätigungsorgan 66 fest verbunden sein oder damit integral ausgestaltet sein, um im Bereich dieses Abstützelements 94 dann die drehfeste Kopplung zwischen dem ersten Betätigungsorgan 66 und der feststehenden Baugruppe 74 erlangen zu können.

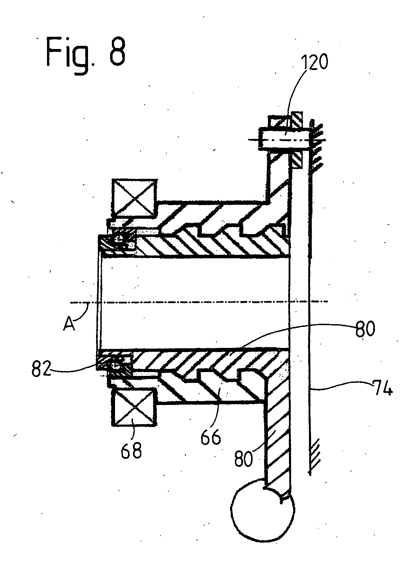

In den Figuren 6 bis 8 ist ein erfindungsgemäßes Drehmomentübertragungssystem dargestellt, bei welchem die Kupplungsanordnung 14 als herkömmliche Einfachkupplung ausgestaltet ist. Dies bedeutet, dass mit den vorangehend beschriebenen Ausgestaltungsformen Übereinstimmung insofern besteht, als im Wesentlichen mit Ausnahme des vorangehend als erster Kupplungsbereich 40 bezeichneten Abschnitts und allen diesem zugeordneten Komponenten die Torsionsschwingungsdämpferanordnung 12 und die Kupplungsanordnung 14 so aufgebaut sind, wie vorangehend beschrieben. insbesondere weist auch hier die Kupplungsanordnung 14 eine Abstützplatte 38 auf, mit welcher das Kupplungsgehäuse 52 fest verbunden ist. Die Anpressplatte 48, die mit dem Kupplungsgehäuse 52 über Tangentialblattfedern oder dergleichen gekoppelt ist, kann über die Kraftbeaufschlagungsanordnung 64 in Richtung auf die Abstützplatte 38 zu bewegt werden, um die Kupplungsscheibe 50 bzw. deren Reibbeläge einzuklemmen.

Der Betätigungsmechanismus 62 umfasst wieder das erste Betätigungsorgan 66, das über das Drehentkopplungslager 68 bezüglich des Kupplungsgehäuses 52 in beiden axialen Richtungen abgestützt ist. Das radial innerhalb des ersten Betätigungsorgans 66 angeordnete zweite Betätigungsorgan 80, das mit dem ersten Betätigungsorgan 66 wieder in Gewindeeingriff steht, kann über das Drehentkopplungslager 82 die Kraftbeaufschlagungsanordnung 64 radial innen beaufschlagen, um diese in Richtung auf die Anpressplatte 48 zu zu bewegen und somit die Kupplungsanordnung 14 in den Einrückzustand zu bringen. Dazu muss bei dem in Fig. 6 dargestellten System dieses zweite Betätigungsorgan 80 in Richtung auf die Anpressplatte 48 zu verschoben werden, was durch entsprechende Drehung bezüglich des ersten Betätigungsorgans 66 erlangt werden kann.

Man erkennt weiterhin, dass das erste Betätigungsorgan 66 vorzugsweise durch mehrere Drehkopplungsstifte 120 mit der feststehenden Baugruppe 74 drehfest, bezüglich dieser aber axial bewegbar gekoppelt ist. Soll der Reibzustand der Reibeinrichtung 84 hergestellt werden, so wird das zweite Betätigungsorgan 80 wieder in einer Richtung verstellt, welche der zur Verstellung zum Erlangen des Einrückzustands vorgesehenen Verstellrichtung entgegengesetzt ist. Dabei nähert sich das zweite Betätigungsorgan 80 der feststehenden Baugruppe 74 an und kontaktiert diese. Unter Abstützung an der feststehenden Baugruppe 40 verschiebt dann das zweite Betätigungsorgan 80 bei weiter anhaltender Verdrehung desselben das erste Betätigungsorgan 86 und somit die gesamte Kupplungsanordnung 14 in axialer Richtung, so dass der zweite Reibbereich 88 sich dem ersten Reibbereich 86 annähert und die Reibeinrichtung 84 aktiviert wird.

Es sei darauf hingewiesen, dass selbstverständlich durch den Betätigungsmechanismus 62 nicht nur eine gedrückte Beaufschlagung der Kupplungsanordnung 14 möglich ist, sondern auch bei entsprechender Anbindung der radial inneren Bereiche der Kraftbeaufschlagungsanordnung 64 eine gezogene Anordnung, so dass durch Wegziehen des radial inneren Bereichs der Kraftbeaufschlagungsanordnung 64, welche auch als Membranfeder ausgestaltet sein kann, zunächst die Kupplungsanordnung 14 ausgerückt werden kann, und bei weitergehender Verstellung in dieser Richtung dann die gesamte Kupplungsanordnung 14 verschoben werden kann. Auch bei der vorangehend beschriebenen drückenden Beaufschlagung kann die Kraftbeaufschlagungsanordnung 64 als Membranfeder bzw. als Kraftspeicher ausgestaltet sein, so dass die gesamte Kupplungsanordnung hier als Normal-Geschlossen-Kupplung aufgebaut wäre.

Es sei darauf hingewiesen, dass bei allen vorangehend beschriebenen Ausgestaltungsformen die Stärke der Wirkung der Reibeinrichtung 84 dadurch bestimmt ist, wie stark das jeweilige zweite Betätigungsorgan bzw. der Betätigungsmechanismus 62 in der Richtung verstellt wird, in welcher die Kupplungsanordnung 14 axial verschoben wird. Dies wiederum hängt von der auf dieses zweite Betätigungsorgan ausgeübten Betätigungskraft und der im Kraftübertragungsweg dann stattfindenden Kraftumsetzung ab.

Bei allen vorangehend beschriebenen Ausgestaltungsformen ist die Reibwirkung der Grundreibeinrichtung 32 im Wesentlichen unbeeinflusst durch die Aktivierung der Reibeinrichtung 84. Hierfür kann, wie vorangehend bereits ausgeführt, die durch die Kupplungsanordnung 14 auf die Sekundärseite 24 der Torsionsschwingungsdämpferanordnung 12 eingeleitete Axialkraft so weit begrenzt werden, dass eine Auswirkung auf diese Grundreibeinrichtung 32 nicht stattfinden wird. Weiterhin ist es möglich, die Sekundärseite 24 definiert an der Primärseite 16 axial zu lagern, oder durch Einführen definierter Axialbewegungsspiele dafür zu sorgen, dass auch bei aktivierter Reibeinrichtung 84 die Reibeinrichtung 32 eine gleich beleibende Reibcharakteristik aufweist.

## Patentansprüche

1. Drehmomentübertragungssystem für einen Fahrzeugantriebsstrang, umfassend:
- eine Torsionsschwingungsdämpferanordnung (12) mit einer mit einem Antriebsorgan zu koppelnden Primärseite (16) und einer gegen die Wirkung einer Dämpferelementenanordnung (30) bezüglich der Primärseite (16) um eine Drehachse (A) drehbaren Sekundärseite (24),
- eine Kupplungsanordnung (14), wobei ein Eingangsbereich (70) der Kupplungsanordnung (14) mit der Sekundärseite (24) der Torsionsschwingungsdämpferanordnung (12) zur gemeinsamen Drehung um die Drehachse (A) und in Richtung der Drehachse (A) verlagerbar gekoppelt ist,
- eine Reibeinrichtung (84) mit einem ersten Reibbereich (86) an der Primärseite (16) der Torsionsschwingungsdämpferanordnung (12) und einem zweiten Reibbereich (88) an der Kupplungsanordnung (14),
wobei durch Verschiebung der Kupplungsanordnung (14) bezüglich der Sekundärseite (24) der Torsionsschwingungsdämpferanordnung (12) in Richtung der Drehachse (A) der erste Reibbereich (86) und der zweite Reibbereich (88) in Reibwechselwirkung miteinander bringbar sind.

2. Drehmomentübertragungssystem nach Anspruch 1,
**dadurch gekennzeichnet, dass** der Eingangsbereich (70) der Kupplungsanordnung (14) durch eine erste Vorspannanordnung (104) bezüglich der Sekundärseite (24) der Torsionsschwingungsdämpferanordnung (12) in axialer Richtung zum voneinander Wegbewegen der Reibbereiche (86, 88) der Reibeinrichtung (84) vorgespannt ist.

3. Drehmomentübertragungssystem nach Anspruch 2,
**dadurch gekennzeichnet, dass** die erste Vorspannanordnung (104) wenigstens ein zwischen dem Eingangsbereich (70) der Kupplungsanordnung (14) und der Sekundärseite (24) wirkendes Federelement (104), vorzugsweise Tellerfeder, umfasst.

4. Drehmomentübertragungssystem nach einem der Ansprüche 1 bis 3,
**dadurch gekennzeichnet, dass** ein Betätigungsmechanismus (62) vorgesehen ist zum axialen Verschieben der Kupplungsanordnung (14) bezüglich der Sekundärseite (24) der Torsionsschwingungsdämpferanordnung (12).

5. Drehmomentübertragungssystem nach Anspruch 4,
**dadurch gekennzeichnet, dass** der Betätigungsmechanismus (62) sowohl zum Betätigen der Kupplungsanordnung (14) zum Ausrücken/Einrücken derselben aktivierbar ist, als auch zum Verschieben der Kupplungsanordnung (14) bezüglich der Sekundärseite (24) der Torsionsschwingungsdämpferanordnung (12) aktivierbar ist.

6. Drehmomentübertragungssystem nach Anspruch 4 oder 5,
**dadurch gekennzeichnet, dass** der Betätigungsmechanismus (62) ein bezüglich des Eingangsbereichs (70) der Kupplungsanordnung (14) sich abstützendes erstes Organ (66) und ein zum Einleiten einer Betätigungskraft bei Verstellung in einer ersten Stellrichtung sich bezüglich einer Kraftbeaufschlagungsanordnung (60) der Kupplungsanordnung (14) und bezüglich des ersten Organs (66) abstützendes zweites Organ (76; 80) aufweist, wobei bei Verstellung in einer zweiten Stellrichtung das zweite Organ (76; 80) sich bezüglich des ersten Organs (66) und einer feststehenden Baugruppe (74) zum Verschieben der Kupplungsanordnung (14) in axialer Richtung abstützt.

7. Drehmomentübertragungssystem nach Anspruch 6,
**dadurch gekennzeichnet, dass** das zweite Organ (76) bezüglich der feststehenden Baugruppe (74) über eine die Kupplungsanordnung (14) in Richtung zum Herstellen der Reibwechselwirkung zwischen den Reibbereichen (86, 88) vorspannende zweite Vorspannanordnung (110) abgestützt oder abstützbar ist.

8. Drehmomentübertragungssystem nach Anspruch 7,
**dadurch gekennzeichnet, dass** die zweite Vorspannanordnung (110) wenigstens ein Federelement (110), vorzugsweise Tellerfeder umfasst.

9. Drehmomentübertragungssystem nach einem der Ansprüche 1 bis 8,
**dadurch gekennzeichnet, dass** wenigstens einer der Reibbereiche (86, 88) bezüglich der diesen aufweisenden Baugruppe von Primärseite (16) und Kupplungsanordnung (14) durch eine dritte Vorspannanordnung (92) in axialer Richtung elastisch und zum Vorspannen in Richtung auf den jeweils anderen Reibbereich (88, 86) zu abgestützt ist.

10. Drehmomentübertragungssystem nach Anspruch 9,
**dadurch gekennzeichnet, dass** die dritte Vorspannanordnung (92) wenigstens ein Federelement (92), vorzugsweise Schraubendruckfeder, umfasst.

11. Drehmomentübertragungssystem nach einem der Ansprüche 1 bis 10,
**dadurch gekennzeichnet, dass** die Kupplungsanordnung (14) eine Abstützplatte (38) sowie eine damit fest verbundene Gehäuseanordnung (52) aufweist, wobei die Abstützplatte (38) für wenigstens einen Kupplungsbereich (40; 42) der Kupplungsanordnung (14) ein Widerlager bildet und die Kupplungsanordnung (14) im Bereich der Abstützplatte (38) mit der Sekundärseite (24) der Torsionsschwingungsdämpferanordnung (12) verbunden ist.
